(19) Europäisches Patentamt
European Patent Office
Office européen des brevets

(11)  **EP 2 671 733 B1**

(12)  **EUROPÄISCHE PATENTSCHRIFT**

(45) Veröffentlichungstag und Bekanntmachung des Hinweises auf die Patenterteilung:
**01.06.2016 Patentblatt 2016/22**

(51) Int Cl.:
**B60C 23/00** (2006.01)

(21) Anmeldenummer: **13160287.2**

(22) Anmeldetag: **21.03.2013**

(54) **Verfahren zum Reifendruckanpassen**

Method for tyre pressure adjustment

Procédé d'ajustement de la pression des pneus

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.06.2012 DE 102012010942**

(43) Veröffentlichungstag der Anmeldung:
**11.12.2013 Patentblatt 2013/50**

(73) Patentinhaber: **CLAAS Selbstfahrende Erntemaschinen GmbH 33428 Harsewinkel (DE)**

(72) Erfinder:
- **Hansen, Thomas**
  **33142 Büren (DE)**
- **Wagemann, Sebastian**
  **59302 Oelde (DE)**
- **Krauss, Andreas**
  **33428 Harsewinkel (DE)**
- **Fuhrmann, Carsten**
  **33604 Bielefeld (DE)**

(56) Entgegenhaltungen:
**DE-A1- 3 300 457     US-A- 5 180 456**

**Beschreibung**

Die vorliegende Erfindung betrifft ein Verfahren zum Anpassen des Drucks in Luftreifen, insbesondere in den Luftreifen eines landwirtschaftlichen Fahrzeugs.

Der ideale Reifendruck variiert bei landwirtschaftlichen Fahrzeugen stark in Abhängigkeit von den Einsatzbedingungen. Während bei Straßenfahrt ein hoher Reifendruck die Rollreibung und die am Reifen geleistete Walkarbeit gering hält und so eine energieeffiziente und materialschonende Fortbewegung ermöglicht, ist beim Feldeinsatz ein deutlich niedrigerer Reifendruck wünschenswert, um das Gewicht des Fahrzeugs auf eine große Aufstandsfläche zu verteilen und dadurch die Bodenverdichtung zu minimieren bzw. um ein Anschmiegen des Reifenprofils an den Boden und dadurch eine effiziente Übertragung der Antriebskraft zu ermöglichten. Daher ist es an sich wünschenswert, jeweils beim Wechsel zwischen Straßenfahrt und Feldeinsatz den Reifendruck anzupassen. Wenn die Reifendruckanpassung jedoch zu viel Arbeitszeit des Fahrzeugführers beansprucht, ist damit zu rechnen, dass sie unterbleibt.

Aus der DE 33 00 457 A1 ist eine Reifendruckregeleinrichtung für ein Fahrzeug bekannt, bei welchem die Reifen durch eine gemeinsame Druckluftleitung mit einem Vorratsbehälter mit Druckluft verbunden sind.

Aus der US 5,180,456 ist ein Verfahren zum Anpassen des Drucks in Luftreifen gemäß dem Oberbegriff des Anspruches 1 bekannt.

Aus DE 10 2009 051 403 A1 ist ein Reifendrucküberwachungssystem für ein Fahrzeug bekannt, bei dem alle Reifen des Fahrzeugs an eine gemeinsame Verteilerleitung angeschlossen sind. Die Verteilerleitung ist mit einem Druckspeicher über ein Steuerventil und über eine Drossel verbunden. Mit Hilfe von beiderseits der Drossel angeordneten Druckfühlern kann die Richtung eines Luftstromes über die Drossel erfasst werden. Wenn der Luftstrom zum Erliegen kommt, dann ist der Druck in den Reifen an den des Druckspeichers angeglichen, und die Reifenventile sowie das Steuerventil können geschlossen und die Reifen von der Verteilerleitung getrennt werden. Da im Laufe einer Reifendrückanpassung mit diesem herkömmlichen System die Druckdifferenz zwischen Reifen und Druckspeicher im Laufe der Zeit immer kleiner wird, verlangsamt sich auch der Luftstrom, und die für eine Druckangleichüng erforderliche Zeit ist lang. Hinzu kommt, dass landwirtschaftliche Fahrzeuge wie insbesondere Mähdrescher oder Traktoren häufig unterschiedlich große Reifen an Hinter- und Vorderachsen aufweisen, die mit unterschiedlichen Drücken betrieben werden. Um ihren Druck anzupassen, ist es notwendig, den Druckspeicher nacheinander auf zwei verschiedene Drücke einzustellen, was die Dauer des Druckanpassungsvorgangs erheblich verlängert.

Ein weiteres Problem ist, dass, wenn an Vorder- und Hinterachsen eines Fahrzeugs der Druck nacheinander angepasst wird, das Fahrzeug eine Nickbewegung ausführt. Wenn das Fahrzeug ein Traktor mit einem daran montierten Bodenbearbeitungswerkzeug wie etwa einem Pflug, einem Grubber oder dergleichen ist, dann führt die Nickbewegung zu einer Veränderung der Bodeneintauchtiefe des Bearbeitungswerkzeugs. Würde sich der Traktor in dieser Zeit bewegen, dann wäre die während der Druckanpassung durchgeführte Bodenbearbeitung aufgrund der schwankenden Eingrifftiefe fehlerhaft. Daher kann die Druckanpassung nur am stehenden Fahrzeug vorgenommen werden und beansprucht Arbeitszeit des Fahrzeugsführers.

Aufgabe der Erfindung ist, ein Verfahren zum Anpassen des Reifendrucks an einem Fahrzeug anzugeben, das mit minimalem Zeitaufwand durchführbar ist.

Die Aufgabe wird gelöst durch ein Verfahren zum Anpassen des Drucks in wenigstens einem ersten und einem zweiten Reifen eines Fahrzeugs von einem Ausgangswert auf einen Zielwert, der zwischen dem Ausgangswert und dem Druck eines Druckreservoirs liegt, mit den Schritten:

> a) Fließenlassen von Luft auf einer ersten Leitung zwischen dem ersten Reifen und dem Reservoir sowie auf einer zweiten Leitung zwischen dem zweiten Reifen und dem Reservoir;
> b) Ermitteln desjenigen Reifens, der seinen Zielwert früher zu erreichen verspricht;
> c) Drosseln des Luftflusses auf der Leitung des in Schritt b) ermittelten Reifens oder Heraufsetzen des Luftflusses auf der Leitung des in Schritt b) nicht ermittelten Reifens.

Unter den zwei Alternativen des Schritts c) ist die erste bevorzugt, da es einfacher ist, bereits in Schritt a) die Luft auf beiden Leitungen mit einer maximal erreichbaren, z.B. einem vollständig geöffneten Ventil der Leitung entsprechenden Flussrate fließen zu lassen, so dass eine weitere Steigerung in Schritt c) nicht mehr möglich ist.

Die Ermittlung, welcher der Reifen seinen Zielwert früher zu erreichen verspricht, kann einer ersten Ausgestaltung des Verfahrens zufolge auf einer Überwachung des Drucks in den Reifen basieren.

Einer zweiten Ausgestaltung zufolge kann auch der sich während der Druckanpassung ändernde Nickwinkel des Fahrzeugs mit Hilfe eines Nickwinkelsensors überwacht werden. Eine solche Überwachung kann insbesondere dazu dienen, zu entscheiden, welcher Reifen seinen Zielwert früher zu erreichen verspricht. Im Allgemeinen wird dies derjenige Reifen sein, dessen Achshöhe sich im Laufe des Schritts a) schneller ändert.

Indem Luft auf beiden Leitungen gleichzeitig fließen gelassen wird, kann der Zeitaufwand für die Druckanpassung insgesamt deutlich verringert werden. Indem bei demjenigen Reifen, der seinen Zielwert früher zu erreichen verspricht, der Luftfluss gedrosselt wird, wird die insgesamt für die Druckanpassung benötigte Zeit nicht verlängert; stattdessen kann die zum Erreichen des Zielwerts tatsächlich benötigte Zeit bei beiden Reifen im Wesentlichen einheitlich gemacht werden. Nickbewegungen des Fahrzeugs aufgrund von auf verschiedenen Achsen unterschiedlich schnell angepassten Drücken werden minimiert. Dadurch können auch Schwankungen der Bodeneingrifftiefe eines von dem Fahrzeug getragenen Bodenbearbeitungswerkzeugs minimiert werden, so dass eine fehlerfreie Bodenbearbeitung selbst während der Druckanpassung möglich ist. Wenn jedoch die Druckanpassung bei fahrendem Fahrzeug vorgenommen wird, ist für den Fahrzeugführer der mit der Druckanpassung verbundene Zeitverlust praktisch null.

Besonders einfach realisierbar ist das erfindungsgemäße Verfahren, wenn das Drosseln in Schritt c) das zeitweilige Sperren der Leitung des in Schritt b) ermittelten Reifens beinhaltet. Dies erlaubt insbesondere die Verwendung von einfachen und preiswerten Stufenventilen zum Steuern der Luftflüsse auf den Leitungen.

Vorzugsweise wird anhand der Ausgangs- und Zielwerte für den ersten und den zweiten Reifen jeweils wenigstens ein Zwischenwert des Drucks festgelegt. Eine solche Festlegung kann verschiedenen Zwecken dienen. So kann, insbesondere wenn in Schritt b) die Ermittlung des Reifens, der seinen Zielwert früher zu erreichen verspricht, auf Drucküberwachung basiert, derjenige Reifen ermittelt werden, der seinen Zwischenwert als erster erreicht.

Die Leitung dieses Reifens bleibt zweckmäßigerweise solange gesperrt, bis auch der andere Reifen seinen Zwischenwert erreicht hat. Je größer die Zahl der geeignet festgelegten Zwischenwerte ist, umso kleiner können auf die sich ändernden Reifendrücke zurückzuführende Nickbewegungen des Fahrzeugs gehalten werden.

Vorzugsweise werden die Zwischenwerte so festgelegt, dass, wenn die Zwischenwerte in beiden Reifen eingestellt sind, das Fahrzeug denselben Nickwinkel einnimmt, wie wenn die Zielwerte eingestellt sind.

Wenn wie oben erwähnt ein Nickwinkelsensor zum Überwachen des Nickwinkels des Fahrzeugs vorhanden ist, dann kann in Schritt c) die Leitung des in Schritt b) ermittelten Reifens so lange gesperrt wird, bis der Nickwinkel einen Sollwert erreicht hat.

Zweckmäßigerweise sollte dieser Sollwert dem Nickwinkel entsprechen, der sich nach Einstellen des Zielwerts im ersten und zweiten Reifen ergibt. So können Abweichungen des tatsächlichen Nickwinkels vom Zielwert klein gehalten werden.

Wenn das Verfahren so häufig ausgeführt wird, dass Druckverluste der Reifen zwischen zwei Druckanpassungen vernachlässigt werden können, dann kann davon ausgegangen werden, dass der Nickwinkel des Fahrzeugs zu Beginn der Druckanpassung derselbe ist wie an ihrem Ende, und dass er sich auch während der Druckanpassung nur in sehr engen Grenzen ändert. Daher kann das Verfahren auch an einem fahrenden Fahrzeug durchgeführt werden, das ein Bodenbearbeitungswerkzeug trägt, ohne dass sich im Laufe des Verfahrens die Bodeneingrifftiefe des Werkzeugs maßgeblich ändert.

Um den Zeitaufwand für das Verfahren zu minimieren, ist es wünschenswert, den Druck in einem der Reifen abschätzen zu können, ohne dafür den Luftstrom in der Leitung zwischen dem Reifen und dem Druckreservoir unterbrechen zu müssen. Eine solche Abschätzung kann insbesondere auf einem an der Leitung gemessenen Druckabfall basieren.

Vorzugsweise ist an der Leitung eine Drosselstelle vorgesehen, an der der Druckabfall gemessen wird.

Als Druck im Reifen kann dann zweckmäßigerweise eine Summe aus einem an der Leitung gemessenen Druck und einem von dem Druckabfall abhängigen Korrekturterm angenommen werden.

Gute Übereinstimmungen zwischen abgeschätztem und tatsächlichem Reifendruck werden erzielt, wenn der Druckabfall mit einem von 1 verschiedenen Exponenten in den Korrekturterm eingeht.

Versuche haben gezeigt, dass der Wert des Exponenten, der die optimale Übereinstimmung zwischen geschätztem und tatsächlichem Reifendruck liefert, in Abhängigkeit von der Geometrie der Leitung und ggf. der darin gebildeten Drosselstelle variiert, weswegen es zweckmäßig sein kann, für jede Leitungsgeometrie den Exponenten jeweils empirisch zu ermitteln. In den meisten Fällen wurde eine optimale Übereinstimmung beim Wert des Exponenten von unter 0,9 und über 0,5 gefunden. Es können aber auch Exponenten von über 1,1 auftreten.

Weitere Merkmale und Vorteile der Erfindung ergeben sich aus der nachfolgenden Beschreibung von Ausführungsbeispielen unter Bezugnahme auf die beigefügten Figuren. Es zeigen:

Fig. 1    eine schematische Darstellung eines landwirtschaftlichen Fahrzeugs, das zur Durchführung des erfindungsgemäßen Verfahrens eingerichtet ist;

Fig. 2    eine typische Entwicklung des wahren Reifendrucks, der Luftdrücke an zwei Messpunkten einer sich zwischen Reifen und Druckreservoir erstreckenden Leitung sowie eines aus diesen gemessenen Drücken abgeschätzten Reifendrucks während des Abfließens von Luft aus einem Reifen des Fahrzeugs der Fig. 1;

Fig. 3    eine typische Entwicklung des Drucks in Vorder- und Hinterreifen des Fahrzeugs aus Fig. 1 im Lauf der Zeit bei Ausführung des erfindungsgemäßen Verfahrens; und

Fig. 4 eine schematische Darstellung eines landwirtschaftlichen Fahrzeugs gemäß einer zweiten Ausgestaltung der Erfindung.

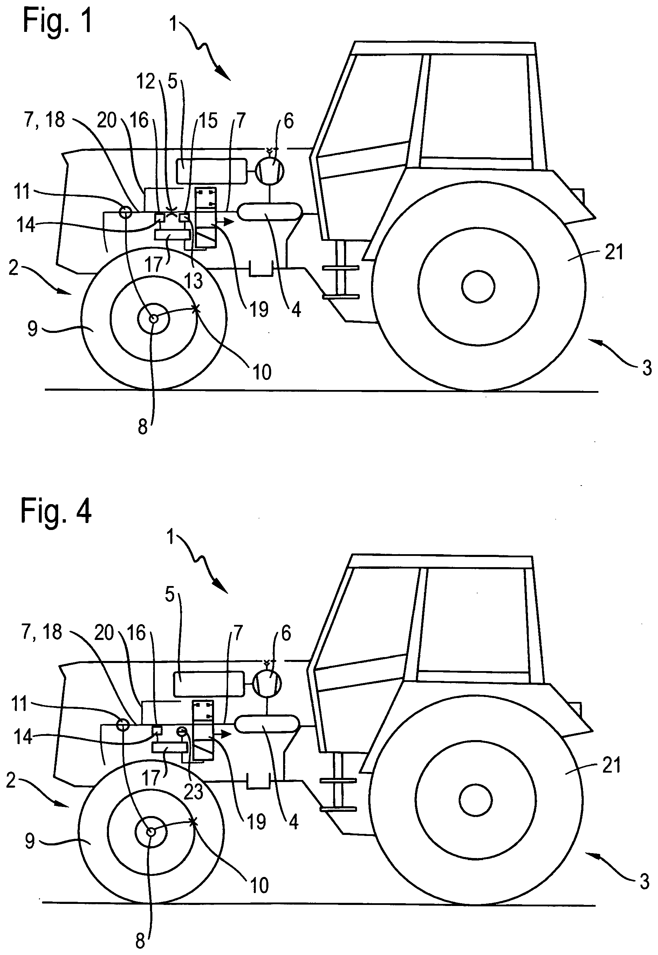

Fig. 1 zeigt als Beispiel für ein landwirtschaftliches Fahrzeug, an dem das erfindungsgemäße Verfahren anwendbar ist, einen Traktor 1, bei dem Vorderräder 2 deutlich kleiner sind als Hinterräder 3, und deshalb oft einen höheren Reifendruck als letztere benötigen. Als ein weiteres bevorzugtes Anwendungsbeispiel könnte ein Mähdrescher dienen, bei dem die Größen- und Druckverhältnisse von Vorder- und Hinterrädern im Allgemeinen entgegengesetzt sind.

An Bord des Traktors 1 befindet sich ein Hochdruckreservoir 4, das im hier dargestellten Fall mit einem von einem Dieselmotor 5 des Traktors 1 angetriebenen Kompressor 6 verbunden ist, um das Hochdruckreservoir 4 nach jedem Abfluss von Druckluft wieder auf einen vorgegebenen Nenndruck zu bringen.

Druckluftleitungen 7, 20 erstrecken sich von dem Reservoir 4 zu Luftkammern eines linken und eines rechten Vorderradreifens 9 bzw. zu Luftkammern eines linken und rechten Hinterradreifens 21. Die Leitungen 7, 20 sind analog zueinander aufgebaut, weswegen in Fig. 1 nur die Leitung 7 mit den an ihr verteilten Komponenten im Detail dargestellt ist.

An einer Stelle 11 gabelt sich die Druckluftleitung 7 in zwei zum rechten bzw. zum linken Vorderrad 2 führende Zweige, die sich jeweils über eine Drehdurchführung 8 zu einem Sitzventil 10 an einer Luftkammer des linken bzw. rechten Vorderradreifens 9 erstrecken. Die Stelle 11 kann als ein einfaches T-Stück ausgebildet sein, über das die Luftkammern der Vorderradreifen 9 kommunizieren, wenn die Sitzventile 10 offen sind. Dann können die Vorderradreifen 9 nur beide gleichzeitig und auf einen identischen Reifendruck eingestellt werden. Die Stelle 11 kann aber auch als Wegeventil ausgebildet sein, welches das Reservoir 4 wahlweise mit dem rechten oder dem linken Vorderradreifen 9 oder mit beiden Reifen 9 gleichzeitig verbindet. Indem so auch ein einzelner Vorderradreifen mit dem Reservoir 4 verbunden werden kann, können unterschiedliche Drücke in den zwei Vorderradreifen 9 eingestellt werden, was im Wesentlichen dann von Bedeutung ist, wenn einer von ihnen aufgrund eines Defekts den Druck nicht halten kann.

Das Sitzventil 10 ist normalerweise geschlossen. Um es in eine offene Stellung umzuschalten, kann ein elektrisches Steuersignal oder ein auf der Leitung 7 anstehender Überdruck genutzt werden. In letzterem Falle genügt es, die Leitung 7 mit Druckluft aus dem Hochdruckreservoir 4 zu beaufschlagen, um eine Verbindung zwischen den Vorderradreifen 9 und dem Hochdruckreservoir 4 herzustellen, über die Luft in die Vorderradreifen 9 zuströmt.

Die Druckluftleitung 7 weist eine Drosselstelle 12 auf, an der der Luftfluss vom Reservoir 4 zu den Reifen 9 einen Druckabfall bewirkt. Um diesen Druckabfall zu erfassen, sind zwei Drucksensoren 13, 14 an einem reservoirseitigen Messpunkt 15 bzw. einem reifenseitigen Messpunkt 16 beiderseits der Drosselstelle 12 angeschlossen. Eine mit den Sensoren 13, 14 verbundene elektronische Steuereinheit 17 kann eingerichtet sein, um rechnerisch die Differenz zwischen den Drücken $p_{15}$, $p_{16}$ an den Messpunkten 15, 16 zu ermitteln, vorzugsweise ist jedoch einer der beiden Sensoren, insbesondere der reservoirseitige Sensor 13, als ein mit beiden Messpunkten 15, 16 verbundener Differenzsensor ausgebildet, so dass die Steuereinheit 17 von diesem Sensor unmittelbar einen für die Druckdifferenz zwischen den Messpunkten 15, 16 repräsentatives Signal empfängt.

Solange die Sitzventile 10 geschlossen sind und keine Luft in der Leitung 7 fließt, ist die Druckdifferenz null und der Druck $p_{15} = p_{16}$ unabhängig vom Druck in den Reifen 9.

Wenn die Sitzventile 10 offen sind, und sich der Druck in den Reifen 9 von dem des Hochdruckreservoirs 4 unterscheidet, fließt Luft in der Leitung 7, und die Druckdifferenz $p_{15}-p_{16}$ ist von Null verschieden. Der wahre Druck in den Vorderradreifen 9 weicht von dem Druck $p_{16}$ am reifenseitigen Messpunkt 16 ab, da ein sich zwischen dem Messpunkt 16 und den Reifen 9 erstreckender Abschnitt 18 der Leitung 7 ebenfalls einen nicht zu vernachlässigenden Strömungswiderstand aufweist, zu dem unter anderem die Drehdurchführungen 8 und die Sitzventile 10 der Reifen 9 beitragen. Überraschenderweise wurde festgestellt, dass dieser Druckabfall im Allgemeinen nicht genau proportional zum Druckabfall $p_{15} - p_{16}$ an der Drosselstelle 12 ist, sondern dass der wahre Druck in den Reifen 9 als Funktion der Drücke $p_{15}$, $p_{16}$ mit guter Genauigkeit angenähert werden kann durch den Ausdruck:

$$p_{rad} = p_{16} - y(p_{15}-p_{16})^z, \qquad\qquad (1)$$

wobei z im Allgemeinen für eine gegebene Geometrie der Leitung 7 und der an ihr angeordneten Komponenten wie etwa 11, 8, 10 etc. empirisch ermittelt werden muss und signifikant von 1 abweicht. Der Faktor y ist ebenfalls eine im Einzelfall für eine gegebene Leitungsgeometrie empirisch zu ermittelnde Größe, für deren numerischen Wert allerdings keine Richtwerte angegeben werden können, da diese unter anderem von der für die Drücke verwendeten Maßeinheit abhängen.

Der von 1 verschiedene Exponent z ist möglicherweise auf unterschiedliches Turbulenzverhalten der Drosselstelle 12 einerseits und des sich zwischen dem Messpunkt 16 und den Reifen 9 erstreckenden Abschnitt 18 der Leitung 7 zurückzuführen: das Einsetzen von Turbulenz führt zu einem erhöhten Druckabfall, und wenn die Neigung zur Turbulenz an der Drosselstelle 12 stärker ist als auf dem zwischen ihr und dem Reifen 9 liegenden Leitungsabschnitt 18, dann wächst mit zunehmender Druckdifferenz auf der Leitung 7 das Druckgefälle an der Drosselstelle 12 schneller als auf dem Abschnitt 18, mit der Folge, dass z einen Wert unter 1 annimmt. Ist hingegen die Drosselstelle 12 weit und ihre Neigung zur Turbulenz gering, dann kann der Druckabfall auf dem Abschnitt 18 schneller zunehmen als an der Drosselstelle 12, so dass sich ein Exponent z > 1 ergibt. Für eine genaue Berechnung des Reifendrucks ist es von Vorteil, wenn die Druckdifferenz $p_{16}$-$p_{15}$ groß genug ist, um mit einem geringen prozentualen Fehler gemessen werden zu können, der Beitrag des Korrekturterms $y(p_{15}$-$p_{16})^z$ jedoch kleiner ist als die Druckdifferenz $p_{15}$-$p_{16}$. Da dies einen stärkeren Druckabfall an der Drosselstelle 12 als auf dem Leitungsabschnitt 18 erfordert, muss die Drosselstelle 12 eng und ihre Neigung zur Turbulenzbildung dementsprechend hoch sein, mit der Folge, dass der Reifendruck bei einer Geometrie der Leitung 7, die einen Exponenten z<1 ergibt, genauer berechenbar ist als im Falle eines Exponenten z>1.

Es ist unmittelbar einleuchtend, dass anhand der Druckmessungen an den Messpunkten 15, 16 die Steuereinheit 17 jederzeit, während Luft durch die Leitung 7 fließt, mit Hilfe der Formel (1) oder einer davon abgeleiteten Nachschlagtabelle einen momentanen Druck $p_{rad}$ in dem Reifen 9 errechen und die Kenntnis dieses Drucks nutzen kann, um zu dem Zeitpunkt, an dem $p_{rad}$ einen Zielwert erreicht, die Sitzventile 10 zu schließen.

Alternativ kann auch zunächst die Leitung 7 offen gehalten werden, bis der Druck in den Reifen 9 an den im Reservoir 4 angeglichen ist. Anschließend wird durch Umschalten eines an der Druckluftleitung 7 zwischen dem Reservoir 4 und dem Messpunkt 15 angeordneten Wegeventils 19 der reservoirseitige Messpunkt 15 vom Hochdruckreservoir 4 getrennt und mit der Umgebung 22 verbunden, die dadurch die Funktion eines Niederdruckreservoirs für die Druckanpassung bekommt. Daraufhin kehrt sich die Flussrichtung der Luft in der Leitung 7 um, in diesem Fall berechnet die Steuereinheit 17 den Druck der Reifen $p_{rad}$ mit der Formel

$$p_{rad} = p_{16} + w(p_{16}-p_{15})^x. \qquad\qquad (2)$$

Da der Strömungswiderstand der Leitung 7 richtungsabhängig sein kann, haben in der Praxis die Parameter w und y bzw. x und z für eine gleiche Leitung 7 zwar ähnliche, aber nicht identische Werte. Auch hier errechnet die Steuereinheit 17 während des Abfließens der Luft aus dem Reifen 9 fortlaufend den Reifendruck $p_{rad}$ nach der oben angegebenen Formel (2) und das schließt das Sitzventil 10, sobald der gewünschte Reifendruck erreicht ist.

Da die Druckluftleitung 20 analog zur Druckluftleitung 7 aufgebaut ist und wie diese eine Drosselstelle mit Drucksensoren, ein Wegeventil etc. aufweist, kann der Druck an den Hinterradreifen 21 in derselben Weise eingestellt werden wie oben für die Vorderradreifen 9 beschrieben; da sich die Geometrien der Leitungen 7, 20 unterscheiden, sind auch die Koeffizienten w, x, y, z der oben angegebenen Reifendruckformeln (1, 2) für Vorder- und Hinterräder unterschiedlich.

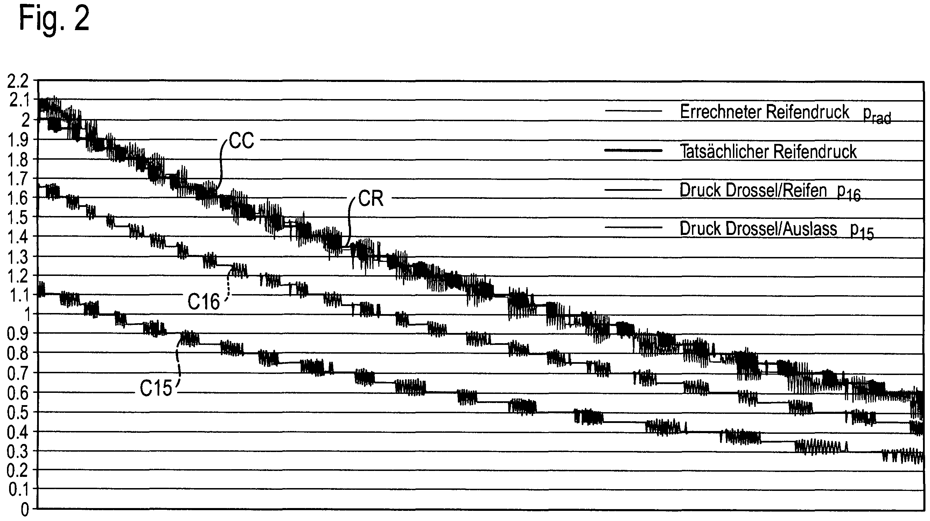

Fig. 2 zeigt das Ergebnis einer Druckmessung, die an dem in Fig. 1 gezeigten System während des Ablassens von Luft aus den Reifen 9 durchgeführt wurde: Kurven $p_{15}$, $p_{16}$, $p_r$ repräsentieren jeweils gemessene Drücke an den Messpunkten 15, 16 bzw. im Reifen 9, eine Kurve $p_{rad}$ repräsentiert den nach der obigen Formel (2) errechneten Reifendruck. Der anfängliche Überdruck der Reifen 9 betrug 2 bar, und der Druck wurde abgelassen bis auf einen Endwert von 0,7 bar. Für praktische Anforderungen können die Kurven $p_r$, $p_{rad}$ als identisch betrachtet werden. Der Druckabfall an der Drosselstelle 12, entsprechend der Differenz zwischen den Kurven $p_{15}$, $p_{16}$, ist größer als der Druckabfall auf dem Leitungsabschnitt 18, repräsentiert durch den Unterschied zwischen den Kurven $p_r$, $p_{16}$. Der Exponent x ist hier < 1.

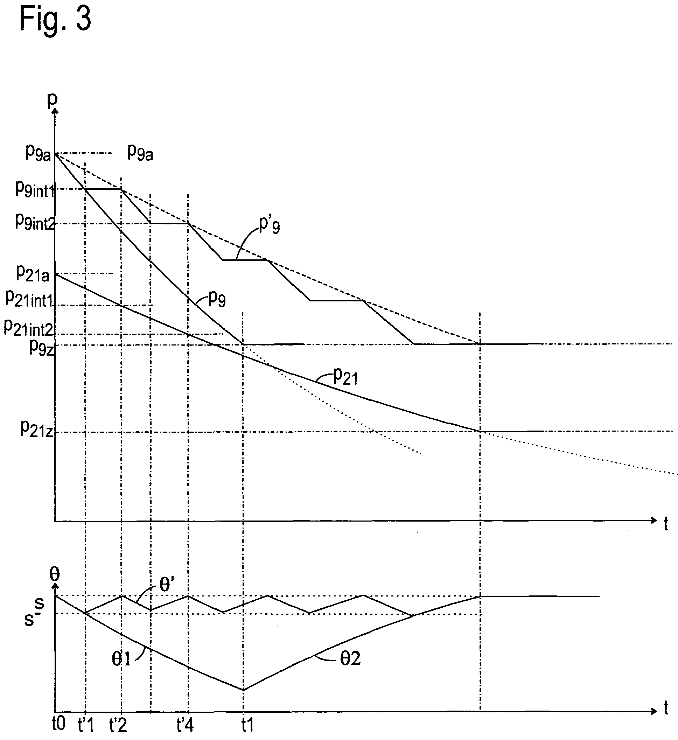

Wenn der Traktor 1 zwischen Straße und Feld wechselt, sollte der Druck in den Reifen 9, 21 jedes Mal angepasst werden. Mögliche Abläufe einer solchen Druckanpassung sind im oberen Diagramm von Fig. 3 dargestellt, das die Entwicklung der Drücke in Vorder- und Hinterradreifen 9, 21 bei einem Wechsel von der Straße aufs Feld veranschaulicht. Zu Beginn der Druckanpassung, zum Zeitpunkt t = 0, sind die Anfangswerte $p_{9a}$, $p_{21a}$ der Drücke von Vorder- und Hinterrädern die vorgeschriebenen Drücke für Straßenfahrt. Zielwerte der Druckanpassung, mit $p_{9z}$, $p_{21z}$ bezeichnet, sind die für Feldfahrt vorgeschriebenen Drücke. Diese liegen jeweils unter den vorgeschriebenen Drücken für die Straßenfahrt, und die vorgeschriebenen Drücke $p_{9a}$, $p_{9z}$ für die Vorderradreifen 9 sind sowohl bei Feld- als auch bei Straßenfahrt jeweils höher als die entsprechenden Drücke $p_{21a}$, $p_{21z}$ für die Hinterradreifen 21.

Eine Möglichkeit, die Druckanpassung vorzunehmen, ist, zur Zeit t = t0 die Sitzventile 10 an Vorder- und Hinterradreifen 9, 21 zu öffnen und sie jeweils solange offen zu halten, bis die betreffenden Reifen 9, 21 ihren Zielwert $p_{9z}$, $p_{21z}$ erreicht haben. Aufgrund des höheren Druckes in den Vorderradreifen 9 und ihres kleineren Volumens nähert sich der Druck der Vorderradreifen 9 dem Zielwert $p_{9z}$ wesentlich schneller als der Hinterraddruck seinem Zielwert $p_{21z}$, wie durch Kurven $p_9$, $p_{21}$ in Fig. 3 dargestellt. Der schnelle Druckverlust auf den Vorderradreifen 9 führt zu einem Absinken der Vorderachse und damit zu einer abwärtsgerichteten Nickbewegung der gesamten Karosserie des Traktors 1. Dem entspricht in dem zweiten Diagramm der Fig. 2, das den Nickwinkel θ der Karosserie als Funktion der Zeit t zeigt, ein abfallendes Kurvensegment θ1.

Wenn zu einem Zeitpunkt t1 die Vorderradreifen 9 ihren Zieldruck $p_{9z}$ erreichen, werden die Sitzventile 10 der Vorderradreifen 9 geschlossen, und der Druck in ihnen bleibt konstant auf $p_{9z}$. Da die Hinterradreifen 21 ihren Zieldruck noch nicht erreicht haben, geht dort die Druckabsenkung weiter, und dementsprechend senkt sich auch die Hinterradachse. Daher nimmt der Nickwinkel nach dem Zeitpunkt t1 wieder zu, wie durch das Kurvensegment $\theta 2$ dargestellt, und wenn schließlich zum Zeitpunkt t2 der Zieldruck $p_{21z}$, auch in den Hinterradreifen 21 erreicht ist, ist der Nickwinkel $\theta$ des Traktors 1 wieder derselbe wie zu Beginn t0 der Druckanpassung.

Die zwischenzeitliche starke Änderung des Nickwinkels $\theta$ würde jedoch dazu führen, dass ein von dem Traktor 1 getragenes Bodenbearbeitungswerkzeug seine Bodeneingrifftiefe deutlich ändert. Daher kann, wenn eine Druckanpassung in der oben beschriebenen Weise bei fahrendem Traktor 1 vorgenommen wird, nicht sichergestellt werden, dass eine gleichzeitig erfolgende Bodenbearbeitung ordnungsgemäß ist.

Erfindungsgemäß wird daher vorgeschlagen, die Druckanpassung folgendermaßen vorzunehmen: zunächst bestimmt die Steuereinheit 17, welcher der Reifen seinen Zielwert früher zu erreichen verspricht. Es kann grundsätzlich davon ausgegangen werden, dass dies der kleinere, bei höherem Druck betriebene Reifen, hier also der Vorderradreifen 9 ist. Denkbar ist aber auch, dass die Steuereinheit 17 in einer frühen Phase der Druckanpassung die Änderungsgeschwindigkeiten der Drücke an Vorder- und Hinterreifen misst, diese in Beziehung setzt zur Differenz zwischen Ausgangs- und Zielwerten und anhand dieser Daten die voraussichtlich für die Druckanpassung benötigte Zeit für Vorder- und Hinterräder abschätzt.

Anschließend hält die Steuereinheit 17 die Sitzventile 10 an Vorder- und Hinterradreifen 9, 21 geöffnet, bis an den sich schneller anpassenden Reifen, hier also den Vorderradreifen 9, ein erster Zwischenwert $p_{9int1}$ erreicht ist. Mit Erreichen dieses Zwischenwerts zur Zeit t'1 werden die Sitzventile 10 der Vorderradreifen 9 geschlossen, und der Zwischendruck $p_{9int1}$ wird gehalten, während die Druckabnahme an den Hinterradreifen 21 weitergeht.

Wie am unteren Diagramm der Fig. 3 zu erkennen, entwickelt sich der Nickwinkel $\theta$, wenn die Ventile 10 von Vorder- und Hinterradreifen 9, 21 offen sind, zunächst entlang der Kurve $\theta 1$, steigt aber entlang der Kurve $\theta'$ wieder an, sobald zum Zeitpunkt t'1 die Ventile 10 der Vorradreifen 9 geschlossen werden.

Die Ventile 10 der Vorderradreifen 9 bleiben geschlossen, bis zum Zeitpunkt t'2 der Druck in den Hinterradreifen 21 einen Zwischenwert $p_{21int1}$ erreicht. Dieser Zwischenwert kann vorab so festgelegt sein, dass der Nickwinkel $\theta$ bei Drücken $p_{9int1}$, $P_{21int1}$ auf Vorder- und Hinterradreifen 9, 21 der gleichen Wert $\theta_s$, hat wie bei den Ausgangswerten $p_{9a}$, $p_{21a}$ bzw. den Zielwerten $p_{9z}$, $p_{21z}$.

Wenn der Nickwinkel zur Zeit t'2 seinen Ausgangs und Zielwert $\theta_s$ wieder erreicht hat und anschließend wieder die Ventile 10 von Vorder- und Hinterradreifen 9, 21 offen sind, dann nimmt der Nickwinkel $\theta$ entlang der Kurve $\theta'$ wieder ab, bis ein zweiter Zwischenwert $p_{9int2}$ des Drucks erreicht ist. Hier werden die Ventile 10 der Vorderradreifen 9 erneut geschlossen, und der Nickwinkel $\theta$ steigt wieder, bis zum Zeitpunkt t'4 ein Zwischendruck $P_{21int2}$ der Hinterradreifen erreicht ist, bei der der Nickwinkel wieder den Wert $\theta_s$ erreicht hat und die Ventile der Vorderradreifen 9 von neuem geöffnet werden.

Indem sich das Öffnen und Schließen der Ventile 10 der Vorderradreifen 9 oft genug abwechselt, während der Druck der Hinterradreifen 21 sich kontinuierlich dem Zielwert $p_{21z}$ annähert, können Schwankungen des Nickwinkels $\theta$ beliebig klein gemacht werden. Infolgedessen können auch Schwankungen der Eingrifftiefe eines Bodenbearbeitungswerkzeugs so eng begrenzt werden, dass eine Druckanpassung bei fahrendem Traktor die Bodenbearbeitung nicht behindert.

Fig. 4 zeigt in einer zu Fig. 1 analogen Darstellung einen Traktor 1 gemäß einer zweiten Ausgestaltung der Erfindung. Komponenten dieses Traktors, die bereits mit Bezug auf Fig. 1 beschriebenen entsprechen, sind in Fig. 4 mit denselben Bezugszeichen belegt und werden nicht erneut im Detail beschrieben. Ein wesentlicher Unterschied zur Ausgestaltung der Fig. 1 liegt darin, dass ein Neigungssensor 23 zum Erfassen des Nickwinkels, d.h. eines Schwenkwinkels der Karosserie des Traktors 1 um eine quer zur Fahrtrichtung horizontal orientierte Achse, mit der Steuereinheit 17 verbunden ist.

Eine Vereinfachung gegenüber Fig. 1 liegt darin, dass gemäß Fig. 4 nur ein einzelner Drucksensor 14 an einem Messpunkt 16 an einem sich zwischen Wegeventil 19 und Reifen 9 oder 21 erstreckenden Abschnitt 18 der Druckluftleitung 7 angeschlossen ist. Ein solcher vereinfachter Aufbau ermöglicht eine Messung des Reifendrucks nur unter statischen Bedingungen, d.h. wenn das Wegeventil 19 geschlossen, das Sitzventil 10 zwischen dem zu messenden Reifen 9 bzw. 21 und dem Leitungsabschnitt 18 aber offen ist oder zumindest zeitweilig offen gewesen ist, so dass der Druck auf dem Leitungsabschnitt 18 mit dem des zu messenden Reifens übereinstimmt. Selbstverständlich könnte der Neigungssensor 23 aber auch mit der in Fig. 1 gezeigten Anordnung von zwei Drucksensoren beiderseits einer Drosselstelle kombiniert werden, ohne dass dies einen nennenswerten Einfluss auf die im Folgenden beschriebene Arbeitsweise gemäß der zweiten Ausgestaltung hätte.

Wie bereits oben im Falle der ersten Ausgestaltung wird mit Bezug auf Fig. 3 eine Druckanpassung beim Wechsel von der Straße aufs Feld betrachtet. Zunächst öffnet die Steuerschaltung 17 die Sitzventile 10 an Vorder- und Hinterreifen 9, 21, so dass Luft aus beiden abfließt. Aufgrund des kleineren Volumens und der kleineren Aufstandsfläche nimmt nicht nur der Druck am Vorderreifen 9 schneller ab als am Hinterreifen 21, auch die Vorderachse des Traktors 1 sinkt schneller ab als die Hinterachse, so dass der Traktor 1 in der Darstellung der Fig. 4 eine Nickbewegung im Gegenuhrzeigersinn ausführt. Diese Nickbewegung wird vom Neigungssensor 23 erfasst und an die Steuereinheit 17 gemeldet. Anhand der Richtung der Nickbewegung kann die Steuereinheit 17 erkennen, dass der Vorderreifen 9 seinen Zieldruck $P_{9z}$ früher erreichen wird als der Hinterradreifen 21 seinen Zieldruck $p_{21z}$.

Im Falle eines Wechsels vom Feld auf die Straße wären die Verhältnisse entgegengesetzt: der Druck im Reifen 9, 21 müsste durch Zuströmenlassen von Druckluft aus dem Reservoir 4 erhöht werden, und da wiederum die Druckänderung im Vorderradreifen 9 schneller vonstatten geht als im Hinterradreifen 21, würde der Traktor eine Nickbewegung im Uhrzeigersinn ausführen.

Wie oben beschrieben, kann ein Zwischenwert des Drucks $p_{9int1}$ vorgegeben sein, der, wenn er im Vorderradreifen 9 erreicht wird, dazu führt, dass die Steuereinheit 17 das Sitzventil 10 des Vorderradreifens 9 sperrt, das des Hinterradreifens 21 aber offen lässt. Einfacher ist es bei dieser Ausgestaltung jedoch, einen Grenzwert des Nickwinkels $\theta_s$-$\varepsilon$ festzulegen, bei dessen Überschreitung das Sitzventil 10 geschlossen wird. Im einen wie im anderen Falle ändert sich ab der Schließung des Ventils 10 zum Zeitpunkt t'1 nur noch der Druck $p_{21}$ des Hinterradreifens, die Richtung der Nickbewegung kehrt sich um, und der Nickwinkel strebt entlang der Kurve $\theta$' von Fig. 3 wieder dem Start- und Sollwert $\theta_s$ zu. Wenn dieser zum Zeitpunkt t'2 erreicht wird, öffnet das Sitzventil 10 des Vorderradreifens 9 wieder, und die Nickbewegung ändert erneut ihre Richtung.

Die Druckanpassung kann zu beliebigen Zeiten unterbrochen werden, um, wenn in Fig. 4 gezeigt, nur ein einziger Drucksensor 14 vorhanden ist, die Reifendrücke $p_9$, $p_{21}$ jeweils statisch zu messen und bei Erreichen des Zielwerts $p_{9z}$ bzw. $p_{21z}$ das Verfahren zu beenden. Denkbar ist auch, eine Druckmessung jeweils nur an einem der Reifen, hier etwa dem Vorderradreifen 9, vorzunehmen in der Annahme, dass, wenn dieser seinen Zieldruck $_{p9z}$ erreicht hat, und der Nickwinkel sich am Sollwert $\theta_s$ befindet, auch der Druck des Hinterradreifens 21 sich am Zielwert $p_{21z}$ befindet wird, ohne dass es dafür einer Messung bedarf.

**Bezugzeichen**

| | |
|---|---|
| 1 | Traktor |
| 2 | Vorderrad |
| 3 | Hinterrad |
| 4 | Hockdruckreservoir |
| 5 | Dieselmotor |
| 6 | Kompressor |
| 7 | Druckluftleitung |
| 8 | Drehdurchführung |
| 9 | Vorderradreifen |
| 10 | Sitzventil |
| 11 | Stelle |
| 12 | Drosselstelle |
| 13 | Drucksensor |
| 14 | Drucksensor |
| 15 | Messpunkt |
| 16 | Messpunkt |
| 17 | Steuereinheit |
| 18 | Leitungsabschnitt |
| 19 | Wegeventil |
| 20 | Druckluftleitung |
| 21 | Hinterradreifen |
| 22 | Umgebung |
| 23 | Neigungssensor |

**Patentansprüche**

1. Verfahren zum Anpassen des Drucks in wenigstens einem ersten und einem zweiten Reifen (9, 21) eines Fahrzeugs (1) von einem Ausgangswert ($p_{9a}$, $p_{21a}$) auf einen Zielwert ($p_{9z}$, $p_{21z}$), der zwischen dem Ausgangswert ($p_{9a}$, $p_{21a}$) und dem Druck eines Druckreservoirs (4; 22) liegt, **gekennzeichnet durch** die Schritte:

a) Fließenlassen von Luft auf einer ersten Leitung (7) zwischen dem ersten Reifen (9) und dem Reservoir (4;

22) sowie auf einer zweiten Leitung (20) zwischen dem zweiten Reifen (21) und dem Reservoir (4; 22);

b) Ermitteln desjenigen Reifens (9), der seinen Zielwert ($p_{9z}$) früher zu erreichen verspricht;

c) Drosseln des Luftflusses auf der Leitung (7) des in Schritt b) ermittelten Reifens (9) oder Heraufsetzen des Luftflusses auf der Leitung des in Schritt b) nicht ermittelten Reifens (21).

2.  Verfahren nach Anspruch 1, bei dem zum Ermitteln desjenigen Reifens (9), der seinen Zielwert ($p_{9z}$) früher zu erreichen verspricht, der Druck ($p_{rad}$, $p_9$, $p_{21}$) in den Reifen (9, 21) überwacht wird.

3.  Verfahren nach Anspruch 1, bei dem zum Ermitteln desjenigen Reifens (9), der seinen Zielwert ($p_{9z}$) früher zu erreichen verspricht, der Nickwinkel ($\theta$) des Fahrzeugs überwacht wird.

4.  Verfahren nach einem der vorhergehenden Ansprüche, **dadurch gekennzeichnet, dass** das Drosseln in Schritt c) das zeitweilige Sperren der Leitung (7) des in Schritt b) ermittelten Reifens (9) beinhaltet.

5.  Verfahren nach Anspruch 4, mit dem vorbereitenden Schritt

    d) Festlegen wenigstens eines Zwischenwerts ($p_{9int1}$, $p_{21int1}$, $p_{9int2}$, $p_{21int2}$) des Drucks für den ersten und den zweiten Reifen (9, 21) anhand der Ausgangs- und Zielwerte.

6.  Verfahren nach Anspruch 5, bei dem in Schritt b) derjenige Reifen (9) ermittelt wird, der seinen Zwischenwert ($p_{9int1}$) als erster erreicht.

7.  Verfahren nach Anspruch 5 oder 6, bei dem in Schritt c) die Leitung (7) des in Schritt b) ermittelten Reifens (9) so lange gesperrt wird, bis der andere Reifen (21) seinen Zwischenwert ($p_{21int1}$) erreicht hat.

8.  Verfahren nach Anspruch 5, 6 oder 7, bei dem die Zwischenwerte ($p_{9int1}$, $p_{21inti1}$, $p_{9int2}$, $p_{21int2}$) so festgelegt werden, dass, wenn die Zwischenwerte in beiden Reifen (9, 21) eingestellt sind, das Fahrzeug (1) denselben Nickwinkel ($\theta$) einnimmt, wie wenn die Zielwerte ($p_{9z}$, $p_{21z}$) eingestellt sind.

9.  Verfahren nach Anspruch 4, bei dem in Schritt c) die Leitung (7) des in Schritt b) ermittelten Reifens (9) so lange gesperrt wird, bis der Nickwinkel ($\theta$) einen Sollwert ($\theta_s$) erreicht hat.

10. Verfahren nach Anspruch 9, **dadurch gekennzeichnet, dass** der sich nach Einstellen des Zielwerts ($p_{9z}$, $p_{21z}$) im ersten und zweiten Reifen (9, 21) einstellende Nickwinkel vorab abgeschätzt und als Sollwert ($\theta_s$) herangezogen wird.

11. Verfahren nach einem der vorhergehenden Ansprüche, **dadurch gekennzeichnet, dass** es am fahrenden Fahrzeug (1) durchgeführt wird.

12. Verfahren nach einem der vorhergehenden Ansprüche, bei dem das Überwachen des Drucks in einem der Reifen (9, 21) das Messen eines Druckabfalls ($p_{15}$-$p_{16}$) an der den Reifen (9, 21) mit dem Druckreservoir (4; 22) verbindenden Leitung (7, 20) und das Abschätzen des Drucks im Reifen (9, 21) anhand des gemessenen Druckabfalls ($p_{15}$-$p_{16}$) umfasst.

13. Verfahren nach Anspruch 12, bei dem der Druckabfall ($p_{15}$-$p_{16}$) an einer Drosselstelle (12) der Leitung (7) gemessen wird.

14. Verfahren nach Anspruch 12 oder 13, bei dem als Druck im Reifen (9; 21) eine Summe aus einem an der Leitung (7; 20) gemessenen Druck ($p_{15}$, $p_{16}$) und einem vom Druckabfall $p_{15}$-$p_{16}$) abhängigen Korrekturterm angenommen wird.

15. Verfahren nach Anspruch 14, bei dem der Druckabfall ($p_{15}$-$p_{16}$) mit einem Exponenten < 1 oder mit einem Exponenten > 1 in den Korrekturterm eingeht.

**Claims**

1.  A method of adjusting the pressure in at least a first and a second tyre (9, 21) of a vehicle (1) from a starting value ($p_{9a}$, $p_{21a}$) to a target value ($p_{9z}$, $p_{21z}$) which is between the starting value ($p_{9a}$, $p_{21a}$) and the pressure of a pressure reservoir (4; 22), **characterised by** the following steps:

a) causing air to flow on a first line (7) between the first tyre (9) and the reservoir (4; 22) and on a second line (20) between the second tyre (21) and the reservoir (4; 22);

b) ascertaining that tyre (9) which promises to earlier reach its target value ($p_{9z}$); and

c) throttling the air flow on the line (7) of the tyre (9) ascertained in step b) or increasing the air flow on the line of the tyre (21) not ascertained in step b).

2. A method according to claim 1 wherein the pressure ($p_{rad}$, $p_9$, $p_{21}$) in the tyres (9, 21) is monitored to ascertain that tyre (9) which promises to earlier reach its target value ($p_{9z}$).

3. A method according to claim 1 wherein the pitch angle ($\theta$) of the vehicle is monitored to ascertain that tyre (9) which promises to earlier reach its target value ($p_{9z}$).

4. A method according to one of the preceding claims **characterised in that** throttling in step c) includes temporarily blocking the line (7) of the tyre (9) ascertained in step b).

5. A method according to claim 4 with the preparatory step of

d) establishing at least one intermediate value ($p_{9int1}$, $p_{21int1}$, $p_{9int2}$, $p_{21int2}$) of the pressure for the first and the second tyres (9, 21) on the basis of the starting and target values.

6. A method according to claim 5 wherein in step b) that tyre (9) which first reaches its intermediate value ($p_{9int1}$) is ascertained.

7. A method according to claim 5 or claim 6 wherein in step c) the line (7) of the tyre (9) ascertained in step b) is blocked until the other tyre (21) has reached its intermediate value ($p_{21int1}$).

8. A method according to claim 5, claim 6 or claim 7 wherein the intermediate values ($p_{9int1}$, $p_{21int1}$, $p_{9int2}$, $p_{21int2}$) are so established that when the intermediate values in both tyres (9, 21) are adjusted the vehicle (1) assumes the same pitch angle ($\theta$) as when the target values ($p_{9z}$, $p_{21z}$) are set.

9. A method according to claim 4 wherein in step c) the line (7) of the tyre (9) ascertained in step b) is blocked until the pitch angle ($\theta$) has reached a reference value ($\theta_s$).

10. A method according to claim 9 **characterised in that** the pitch angle set after setting of the target value ($p_{9z}$, $p_{21z}$) in the first and second tyres (9, 21) is estimated in advance and used as the reference value ($\theta_s$).

11. A method according to one of the preceding claims **characterised in that** it is carried out on the moving vehicle (1).

12. A method as set forth in one of the preceding claims wherein monitoring of the pressure in one of the tyres (9, 21) includes measurement of a pressure drop ($p_{15}$-$p_{16}$) at the line (7, 20) connecting the tyre (9, 21) to the pressure reservoir (4; 22) and estimation of the pressure in the tyre (9, 21) on the basis of the measured pressure drop ($p_{15}$-$p_{15}$).

13. A method according to claim 12 wherein the pressure drop ($p_{15}$-$p_{16}$) is measured at a throttle location (12) of the line (7).

14. A method according to claim 12 or claim 13 wherein a total of a pressure ($p_{15}$, $p_{16}$) measured at the line (7; 20) and a correction term dependent on the pressure drop ($p_{15}$-$p_{16}$) is assumed as the pressure in the tyre (9; 21).

15. A method according to claim 14 wherein the pressure drop ($p_{15}$-$p_{16}$) is involved in the correction term with an exponent < 1 or with an exponent > 1.

**Revendications**

1. Procédé pour adapter la pression dans au moins un premier et un second pneumatique (9, 21) d'un véhicule (1) depuis une valeur initiale ($p_{9a}$, $p_{21a}$) jusqu'à une valeur cible ($p_{9z}$, $p_{21z}$) qui se situe entre la valeur initiale ($p_{9a}$, $p_{21a}$)

et la pression d'un réservoir de pression (4, 22), **caractérisé par** les étapes de :

> a) envoi d'air dans une première conduite (7) entre le premier pneumatique (9) et le réservoir (4 ; 22) ainsi que dans une seconde conduite (20) entre le second pneumatique (21) et le réservoir (4 ; 22) ;
> b) détermination du pneumatique (9) qui promet d'atteindre sa valeur cible ($p_{9z}$) le plus tôt ;
> c) restriction du flux d'air dans la conduite (7) du pneumatique (9) déterminé à l'étape b) ou augmentation du flux d'air dans la conduite du pneumatique (21) non déterminé à l'étape b).

**2.** Procédé selon la revendication 1, dans lequel, pour déterminer le pneumatique (9) qui promet d'atteindre sa valeur cible ($p_{9z}$) le plus tôt, la pression ($p_{rad}$, $p_9$, $p_{21}$) dans les pneumatiques (9, 21) est surveillée.

**3.** Procédé selon la revendication 1, dans lequel, pour déterminer le pneumatique (9) qui promet d'atteindre sa valeur cible ($p_{9z}$) le plus tôt, l'angle de tangage ($\theta$) est surveillé.

**4.** Procédé selon une des revendications précédentes, **caractérisé en ce que** la restriction à l'étape c) consiste en une fermeture temporaire de la conduite (7) du pneumatique (9) déterminé à l'étape b).

**5.** Procédé selon la revendication 4, comprenant l'étape préparatoire de

> d) définition d'au moins une valeur intermédiaire ($p_{9int1}$, $p_{21inti}$, $p_{9int2}$, $p_{21int2}$) de la pression pour le premier et le second pneumatique (9, 21) à l'aide des valeurs initiale et cible.

**6.** Procédé selon la revendication 5, dans lequel le pneumatique (9) déterminé à l'étape b) est celui qui atteint sa valeur intermédiaire ($p_{9int1}$) en premier.

**7.** Procédé selon la revendication 5 ou 6, dans lequel, à l'étape c), la conduite (7) du pneumatique (9) déterminé à l'étape b) est fermée jusqu'à ce que l'autre pneumatique (21) ait atteint sa valeur intermédiaire ($p_{21int1}$).

**8.** Procédé selon la revendication 5, 6, ou 7, dans lequel les valeurs intermédiaires ($p_{9int1}$, $p_{21int1}$, $p_{9int2}$, $p_{21int2}$) sont définies de façon que, lorsque les valeurs intermédiaires dans les deux pneumatiques (9, 21) sont établies, le véhicule (1) adopte le même angle de tangage ($\theta$) que lorsque les valeurs cibles ($p_{9z}$, $p_{21z}$) sont établies.

**9.** Procédé selon la revendication 4, dans lequel, à l'étape c), la conduite (7) du pneumatique (9) déterminé à l'étape b) est fermée jusqu'à ce que l'angle de tangage ($\theta$) ait atteint une valeur de consigne ($\theta s$).

**10.** Procédé selon la revendication 9, **caractérisé en ce que** l'angle de tangage qui s'établit après établissement de la valeur cible ($p_{9z}$, $p_{21z}$) dans le premier et le second pneumatique (9, 21) est d'abord évalué et utilisé comme valeur de consigne ($\theta s$).

**11.** Procédé selon une des revendications précédentes, **caractérisé en ce qu'**il est réalisé sur le véhicule en marche (1).

**12.** Procédé selon une des revendications précédentes, dans lequel la surveillance de la pression dans un des pneumatiques (9, 21) comprend la mesure d'une baisse de pression ($p_{15}$-$p_{16}$) dans la conduite (7, 20) reliant le pneumatique (9, 21) au réservoir de pression (4 ; 22) et l'évaluation de la pression dans le pneumatique (9, 21) à l'aide de la baisse de pression mesurée ($p_{15}$-$p_{16}$).

**13.** Procédé selon la revendication 12, dans lequel la baisse de pression ($p_{15}$-$p_{16}$) est mesurée au niveau d'un point de restriction (12) de la conduite (7).

**14.** Procédé selon la revendication 12 ou 13, dans lequel la pression admise dans le pneumatique (9 ; 21) est une somme d'une pression ($p_{15}$, $p_{16}$) mesurée sur la conduite (7 ; 20) et d'un terme correctif dépendant de la baisse de pression ($p_{15}$-$p_{16}$).

**15.** Procédé selon la revendication 14, dans lequel la baisse de pression ($p_{15}$-$p_{16}$) intervient dans le terme correctif avec un exposant < 1 ou avec un exposant > 1.

## Fig. 1

## Fig. 4

## Fig. 2

Errechneter Reifendruck $p_{rad}$

Tatsächlicher Reifendruck

Druck Drossel/Reifen $p_{16}$

Druck Drossel/Auslass $p_{15}$

CR

CC

C16

C15

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3300457 A1
- US 5180456 A

- DE 102009051403 A1